(19) Europäisches Patentamt
European Patent Office
Office européen des brevets

(11) **EP 3 741 549 B1**

(12) **EUROPEAN PATENT SPECIFICATION**

(45) Date of publication and mention
of the grant of the patent:
**19.03.2025 Bulletin 2025/12**

(51) International Patent Classification (IPC):
***B31F 1/07*** *(2006.01)*     ***B41J 3/32*** *(2006.01)*
***B41M 3/16*** *(2006.01)*     ***G09B 21/02*** *(2006.01)*

(21) Application number: **19175863.0**

(22) Date of filing: **22.05.2019**

(52) Cooperative Patent Classification (CPC):
**B31F 1/07; B41J 3/32; B41M 3/16; G09B 21/02;**
B31B 50/88; B31F 2201/0733; B31F 2201/0779

(54) **EMBOSSING A CODE SUCH AS A BRAILLE CODE IN A SUBSTRATE**

PRÄGEN EINES CODES, WIE ETWA EINES BRAILLE-CODES IN EINEM SUBSTRAT

GAUFRAGE D'UN CODE TEL QU'UN CODE BRAILLE DANS UN SUBSTRAT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.11.2020 Bulletin 2020/48**

(73) Proprietor: **Flieger Holding B.V.
5215 MN 's-Hertogenbosch (NL)**

(72) Inventor: **van der Heijden, Vincent
5215 MN 's-Hertogenbosch (NL)**

(74) Representative: **Dekker-Garms, Alwine Emilie
RaTiO I/P
Sagittalaan 14
5632 AL Eindhoven (NL)**

(56) References cited:
**DE-A1- 102012 108 966     US-A1- 2003 110 961**

**Description**

FIELD OF THE INVENTION

The present invention relates to a device configured to emboss a code such as a braille code in a substrate. The invention further relates to a method for determining characteristics of control of such a device.

BACKGROUND OF THE INVENTION

Devices configured for embossing a braille code in a substrate are known in the art. The substrate can for example be a cardboard strip that is used to form a box for medicaments. The embossed braille code can provide information such as indication of the intended user of the medicaments, the kind of medicaments packed in the box, expiration date of the medicaments, and way of use of the medicaments.

DE 10 2011 113 632 A1 discloses a device that comprises a cylindrical embossing tool having pin-shaped embossing stamps and a backpressure cylinder. The cylindrical embossing tool and the backpressure cylinder are arranged with respect to each other to form a machining gap for receiving workpieces, such as cardboard or paper strips, and providing those with an embossed pattern consisting of one or more groups of punctiform embossments. Each group reproduces a braille character for reading by the blind.

A braille character normally constitutes at least one punctiform embossment in at least one position of a six-position matrix made up of (i) two vertical columns of three positions each and (ii) top, middle and bottom horizontal rows of two positions each. Different braille characters will have different numbers of punctiform embossments in various selected ones of the six possible positions in the matrix. The embossing stamps of the cylindrical embossing tool of the device according to DE 10 2011 113 632 A1 are arranged in a pattern that is based on the six-position matrix.

The cylindrical embossing tool is further equipped with internally arranged actuators for adjusting the position of the embossing stamps. Each embossing stamp is provided with an individual actuator for moving it in a radial direction of the cylindrical embossing tool between an extended and a retracted position. The actuators may be piezo-electric actuators, electric motors or one of pneumatic and hydraulic power cylinders.

The cylindrical embossing tool also comprises an internally arranged electronic control device for controlling the individual actuators in dependence of a desired embossing pattern. The internally arranged electronic control device is configured to communicate with an externally arranged control device to receive at least one of energy and signals for actuating the internally arranged dedicated individual actuators to position the individual embossing stamps according to the desired embossing pattern. In this way, a remote-controlled or automated conversion between different desired embossing patterns is possible. This conversion can be done quickly so that set-up time compared to a manual conversion is considerably shortened.

Although the device according to DE 10 2011 113 632 A1 enables fast automated setting up of a variable embossing pattern, a disadvantage of this known device is the complicated construction of the cylindrical embossing tool. Because of the large number of internally arranged actuators for positioning each embossing stamp individually and the interaction between the embossing stamps, the actuators, the internally arranged electronic control device and the externally arranged control device, the device is susceptible to malfunctions. The malfunctions can be electrical and/or mechanical in nature. Consequently, the reliability of the device is compromised.

In view of the above, there is a need to provide a more reliable device that enables automated setting up of a variable embossing pattern.

SUMMARY OF THE INVENTION

It is an object of the present invention to provide a device configured to emboss a code in a substrate that pre-empts or at least reduces at least one of the above-mentioned and/or other disadvantages associated with the device known in the art.

It is also an object of the present invention to provide a method for determining characteristics of control of a device according to the invention.

Aspects of the present invention are set out in the accompanying independent and dependent claims. Features from the dependent claims may be combined with features from the independent claim as appropriate and not merely as explicitly set out in the claims.

At least one of the above-mentioned objects is achieved by a device comprising a first embossing element and a second embossing element between which a passage for conveying the substrate is defined, the passage including an embossing area where the first embossing element and the second embossing element interact to emboss a code in the substrate during operation of the device, the first embossing element comprising a set of studs and the second embossing element being provided with a corresponding set of recesses, each stud of the set of studs being configured and arranged to be movable between an extended position in which embossing a code element in the substrate is enabled and a retracted position in which embossing a code element in the substrate is prevented. The device further comprises a setting unit configured to put studs of a respective subset of the set of studs to one of the extended position and the retracted position. The setting unit includes a manipulating mechanism configured to manipulate at least one stud of the respective subset, and a controller configured to process information relating to a predetermined position pattern of the studs of the respective subset and to control operation of the manipulating mechanism based on said information. The first embossing element and the manipulating mechanism are movably arranged with respect to each other so that the manipulating mechanism is capable of successively covering subsets of the set of studs.

When the device having the features as defined in the foregoing is applied, it is possible to establish desired predetermined position patterns of studs of successive subsets of the set of studs. The predetermined position patterns of the studs correspond to a code that is to be embossed in the substrate. A practical example of such a code is a braille code, and in view thereof, the invention will hereinafter be explained in the braille context. A subset of six studs corresponds to one braille code character being for example a letter, a number or a punctuation mark. Each stud of the subset of six studs corresponds to a braille code element that can be embossed in the substrate when the respective stud is in the extended position. The substrate can comprise any suitable material such as cardboard, paper, a polymer film or combinations thereof. The manipulating mechanism enables establishing a desired predetermined position pattern of the studs of a respective subset without a need for using a dedicated actuator to move each individual stud between the extended position or the retracted position thereof. Hence, when the invention is put to practice, the complexity of the first embossing element is reduced compared to the device described in prior art document DE 10 2011 113 632 A1.

Further, it is not at all necessary for the manipulating mechanism to be internally arranged in the first embossing element. Instead, it is most practical to have an external arrangement of the manipulating mechanism with respect to the first embossing element, so that it can easily be replaced in case of malfunctioning. This is in contrast with the device described in prior art document DE 10 2011 113 632 A1 in which the actuators and the electronic control device are integrated in the cylindrical embossing tool. If the cylindrical embossing tool of the prior art device is not entirely replaced in case of a defective actuator and/or electronic control device, repair of a defective actuator and/or electronic control device always involves removal of the defective component and installation of either a revised component or a new one. Hence, in the conventional situation, repair is more laborious and will give rise to a longer down-time of the device. In the device according to the invention, defective components can more easily be exchanged. Consequently, down-time of the device according to the invention can be shortened.

In an embodiment of the device according to the invention, the manipulating mechanism is configured to exert pressure on at least one stud of the respective subset of the set of studs in at least one of the extended position and the retracted position of the at least one stud. In such configuration of the manipulating mechanism, when the at least one stud is in the extended position, it can under the influence of pressure exerted by the manipulating mechanism be moved to the retracted position. In a similar way, when the at least one stud is in the retracted position, it can under the influence of pressure exerted by the manipulating mechanism be moved to the extended position. In both situations, the pressure can have a pulling or a pushing effect on the studs, whatever is appropriate in a given design of the device.

In an embodiment of the device according to the invention, the manipulating mechanism is configured to exert the pressure on the at least one stud of the respective subset of the set of studs through a fluid medium. The fluid medium can comprise a compressed gas, e.g. compressed air or nitrogen, or a liquid, e.g. oil.

In an embodiment of the device according to the invention, the setting unit comprises at least one sensing mechanism that is configured and arranged to detect an actual position of at least one stud of the respective subset of the set of studs and to provide the controller with input about the actual position of said at least one stud, wherein the controller is configured to compare the input about the actual position of said at least one stud with information relating to a reference position for said at least one stud. By providing and using a sensing mechanism, the actual position of the at least one stud of the subset of studs can be determined and compared with a predetermined reference position in order to enable a check of the actual position of the at least one stud and eventually to thereby avoid errors in the code to be embossed.

In an exemplary embodiment, the reference position of the at least one stud is the extended position. Upon determining that the actual position of the at least one stud for example is the extended position, the sensing mechanism provides this information to the controller. The controller compares the information received from the sensing mechanism, i.e. the actual position of the at least one stud being the extended position, with the reference position of the at least one stud, being the extended position. The controller determines that the at least one stud is in the reference position. No action is required.

In another exemplary embodiment, the reference position of the at least one stud is the retracted position. Upon receiving information from the sensing mechanism that the actual position of the at least one stud for example is the extended position, the controller will determine that the at least one stud is not in the reference position. The controller can provide a signal to the manipulating mechanism of the setting unit to move the at least one stud to the retracted position and/or can issue a warning signal indicating to a user that something is wrong so as to enable the user to track malfunctioning components in the device.

In an embodiment of the device according to the invention, the setting unit comprises a first sensing mechanism and a second sensing mechanism that are movably arranged with respect to the first embossing element so that the first sensing mechanism and the second sensing mechanism are capable of successively covering studs of respective subsets of the set of studs, and wherein the manipulating mechanism is arranged between the first sensing mechanism and the second sensing mechanism whereby the setting unit is configured to put the at least one stud of a respective subset of the set of studs successively under the influence of the first sensing mechanism, the manipulating mechanism and the second sensing mechanism in a movement of the first embossing element and the setting unit with respect to each other. It is noted that in the following description only one subset of the set of studs is described for the sake of simplicity, whereas the person skilled in the art will appreciate that the device according to the invention can be configured for simultaneously setting multiple subsets of the set of studs. The first sensing mechanism is configured to determine if all studs of a subset of studs are in a predetermined initial position being one of the retracted position or the extended position. If this is not the case, the first sensing mechanism will provide an error signal. In reaction to the error signal, it needs to be checked why not all studs of the subset are in the predetermined initial position. This could be caused by a malfunctioning stud that needs to be repaired or replaced.

Once all studs are in the predetermined initial position, the first embossing element and the setting unit are moved with respect to each other such that the subset of studs is positioned opposite the manipulating mechanism of the setting unit. The controller of the setting unit is provided with information relating to a predetermined position pattern of the studs of the subset. The predetermined position pattern corresponds to one braille code character that is to be embossed in the substrate. If the predetermined initial position of the studs of the subset is the extended position, the controller will control operation of the manipulation mechanism of the setting unit based on said information so as to move studs of the subset that do not need to emboss a braille code element in the substrate from the extended position to the retracted position. The person skilled in the art will appreciate that if the initial position is the retracted position, the manipulation mechanism is controlled so as to move the studs of the subset that need to emboss a braille code element in the substrate from the retracted position to the extended position.

Once the studs of the subset of studs have been acted upon by the manipulation mechanism, the first embossing element and the setting unit are moved with respect to each other such that the subset of studs is positioned opposite the second sensing mechanism of the setting unit. The second sensing mechanism will determine the actual positions of each of the studs of the subset and provide this information to the controller of the setting unit. The controller compares the information received from the second sensing mechanism, i.e. the actual positions of each of the studs of the subset, with the predetermined position pattern. If the actual positions of each of the studs of the subset are in accordance with the predetermined position pattern, then the studs of the subset are correctly set, and no further action is required. If the actual position of at least one stud of the subset is not in accordance with the predetermined position pattern, then setting of said at least one stud was done incorrectly. Further action is required to correct this. One possibility is to repeat the foregoing steps. The controller may be programmed to keep score of deviant settings as found in various setting operations. The fact is that when a particular stud appears to be at an incorrect position in different setting operations, this may be taken as an indication that something is wrong with the stud.

In an embodiment of the device according to the invention, the device comprises a biasing mechanism that is configured and arranged to bias each stud of the set of studs of the first embossing element to one of the extended position and the retracted position. The biasing mechanism can be configured such that the extended position is the predetermined initial position for all studs of the set of studs. The person skilled in the art will appreciate that the biasing mechanism can also be configured such that the retracted position is the predetermined initial position for all studs of the set of studs.

In an embodiment of the device according to the invention, the biasing mechanism comprises a spring arrangement per stud. The spring arrangement is configured and arranged to bias each stud to a predetermined initial position being either the extended position or the retracted position.

In an embodiment of the device according to the invention, the device comprises a locking and releasing mechanism that is adjustable to assume one of a locking state and a releasing state per stud, and that is configured and arranged to mechanically lock each of the studs of a respective subset of the set of studs in the extended position or in the retracted position in the locking state, and to release the studs of said respective subset in the releasing state so that each stud of said respective subset is movable between the extended position and the retracted position. When the locking and releasing mechanism is in the locking state, all studs of a respective subset are locked in their respective positions, i.e. either the extended position or the retracted position. When the locking and releasing mechanism is in the releasing state in respect of the studs of a subset, all studs of the subset can be moved. When a biasing mechanism as mentioned is applied in the device according to the invention, the biasing mechanism may act on each of the studs of the subset when the locking and releasing mechanism is in the releasing state, so that it is achieved that each of the studs is in a predetermined initial position being either the extended position or the retracted position. From the predetermined initial position, the studs of the subset can be set by the manipulating mechanism of the setting unit to their respective positions, i.e. either the extended position or the retracted position, in accordance with the predetermined position pattern that corresponds to one braille code character that is to be embossed in the substrate. Once the studs have assumed their positions in accordance with the predetermined position pattern, all studs of the subset can be mechanically locked by putting the locking and releasing mechanism to its locking state.

In an embodiment of the device according to the invention, the locking and releasing mechanism comprises a pin-hole arrangement per stud, a part of each stud being provided with a first hole and a second hole, the pin of each pin-hole arrangement being movably arranged in the device to be insertable into the first hole when the stud is in the extended position, to be insertable into the second hole when the stud is in the retracted position, and to be removable out of either one of the first hole and the second hole to release the stud. When the pins of the respective pin-hole arrangements are inserted in the respective first holes and second holes of the respective studs, the locking and releasing mechanism is in its locking state in respect of the studs, and the studs are mechanically locked in either their extended position or retracted position. When the pins of the respective pin-hole arrangements are removed from the respective first holes and second holes of the respective studs, the locking and releasing mechanism is in its releasing state in respect of the studs, which are released and movable in that case.

In an embodiment of the device according to the invention, the device comprises an engagement tool that is configured to engage with the locking and releasing mechanism and to vary the state of the locking and releasing mechanism per stud. In case the locking and releasing mechanism comprises a pin-hole arrangement per stud, as suggested in the foregoing, the engagement tool can be configured to act on the pins so as to move them in and out of the holes in order to realize the locking state or releasing state of the locking and releasing mechanism according to desire.

In an embodiment of the device according to the invention, the device comprises a cover element that is adjustable to be in one of a default position with respect to the first embossing element and an actuated position with respect to the first embossing element, and that is configured and arranged to prevent operation of the locking and releasing mechanism in the default position, and to allow operation of the locking and releasing mechanism in the actuated position. The cover element as mentioned has a function in rendering the locking and releasing mechanism inoperable as a default, wherein it is necessary to put the cover element in an actuated position first before the locking and releasing mechanism can be operated. For example, if the locking and releasing mechanism is in the locking state and the cover element is in the default position, the studs of the set of studs of the first embossing element remain mechanically locked and a previously set predetermined position pattern of the studs of the respective subsets of the set of studs remains the same, without any risk that accidental changes occur.

The cover element may be designed as an adjustable portion of a carrier, in which case the cover element may be movable between a position for allowing access to the locking and releasing mechanism and a position for blocking access to the locking and releasing mechanism, wherein the size of the adjustable portion may be chosen such as to achieve that the locking and releasing mechanism can be operated in respect of all studs of at least one subset of the set of studs in the actuated position of the cover element. In that case, when the cover element is in the position for allowing access to the locking and releasing mechanism, operation of the locking and releasing mechanism is enabled so that the studs of the at least one selected subset can successively be released and mechanically locked to set the at least one different predetermined position pattern that corresponds to at least one predetermined braille code character that is to be embossed in the substrate. The carrier can have a role in preventing subsets of the set of studs comprising studs that do not need to be adjusted at that time from accidental changes, particularly by being configured and arranged so as to block access to the locking and releasing mechanism. Assuming that the locking and releasing mechanism is in the locking state in respect of the skipped subsets, the studs of those subsets remain mechanically locked and any previously set predetermined position patterns of the studs of those subsets remain the same.

In an embodiment of the device according to the invention comprising the above-mentioned cover element, the device comprises a cover element manipulating tool configured to act on the cover element and to vary the position of the cover element. The cover element manipulating tool can be hook-shaped and arranged to engage with the cover element and to push or pull the cover element to a position as desired.

In an embodiment of the device according to the invention, the first embossing element comprises at least one disc having a circular periphery, wherein the second embossing element comprises at least one disc having a circular periphery, and wherein the first embossing element and the second embossing element comprise the same number of discs. In an exemplary embodiment, the circular periphery of each disc of the first embossing element and the second embossing element has a width that is sufficient to accommodate one braille code character. Along the circular periphery of such discs successive braille code characters are arranged. To enable embossing additional lines of braille code on the substrate, additional discs can be provided to both the first embossing element and the second embossing element.

According to another aspect of the present invention, a method is provided for determining characteristics of control of a device according to the present invention, wherein the predetermined position pattern of the studs of a respective subset of the set of studs of the first embossing element is provided in the form of a computer-readable file, and wherein a computer program is provided and run, and the computer program reads said file, determines control signals, and transmits said control signals to components of the device according to the present invention in setting said predetermined position pattern.

## BRIEF DESCRIPTION OF THE DRAWINGS

Further features and advantages of the invention will become apparent from the description of the invention by way of exemplary and non-limiting embodiments of a device for embossing a braille code in a substrate according to the invention.

The person skilled in the art will appreciate that the described embodiments of the device are exemplary in nature only and are not to be construed as limiting the scope of protection in any way. The person skilled in the art will realize that alternatives and equivalent embodiments of the device can be conceived and reduced to practice without departing from the scope of protection of the present invention.

Reference will be made to the figures on the accompanying drawing sheets. The figures are schematic in nature and therefore not necessarily drawn to scale. Further, equal reference numerals denote equal or similar parts. On the attached drawing sheets,

figure 1 shows a schematic perspective view of a first exemplary, non-limiting embodiment of a device according to the invention for embossing a braille code in a substrate;

figure 2 shows a schematic cross-section of an exemplary, non-limiting embodiment of a manipulating mechanism of the device shown in figure 1;

figure 3 shows a schematic perspective view of a portion of a disc of a first embossing element according to an exemplary, non-limiting embodiment thereof, wherein a part of the disc is cut away to provide a perspective view on exemplary, non-limiting embodiments of a biasing mechanism, a locking and releasing mechanism and studs of the device shown in figure 1;

figure 4 shows a schematic perspective view of a portion of a carrier including an adjustable portion functioning as a cover element in the device shown in figure 1, according to an exemplary, non-limiting embodiment of the cover element, wherein the cover element is in a default position thereof, besides (portions of) other components of the device shown in figure 1;

figure 5 shows a schematic perspective view of the portion of the carrier including the cover element shown in figure 5, wherein the cover element is in an actuated position thereof, besides (portions of) other components of the device shown in figure 1;

figure 6A shows a schematic perspective view of an exemplary, non-limiting embodiment of an engagement tool of the device shown in figure 1; and

figure 6B shows a schematic perspective view of an exemplary, non-limiting embodiment of a cover element manipulating tool of the device shown in figure 1.

## DETAILED DESCRIPTION OF EMBODIMENTS

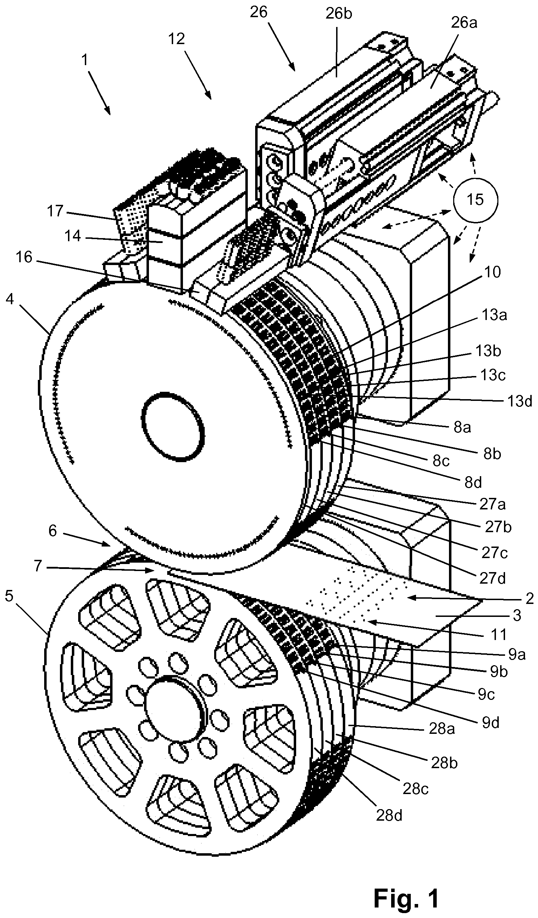

Figure 1 shows a schematic perspective view of a first exemplary, non-limiting embodiment of a device 1 for embossing a braille code 2 in a substrate 3 according to the invention. The device 1 comprises a first embossing element 4 and a second embossing element 5 between which a passage 6 is defined for conveying the substrate 3. The substrate 3 can comprise any suitable material such as cardboard, paper, a polymer film or combinations thereof, and may be designed for use as part of a package. The substrate 3 may be provided as an individual piece taken from a stack of separate pieces, but it is also possible for the substrate 3 to be provided as part of a string of interconnected pieces.

The passage 6 between the first embossing element 4 and the second embossing element 5 includes an embossing area 7 where the first embossing element 4 and the second embossing element 5 interact to emboss a braille code 2 in the substrate 3. In the embodiment of the device 1 shown in figure 1, the first embossing element 4 comprises four discs 27a, 27b, 27c, 27d having a circular periphery. The second embossing element 5 also comprises four discs 28a, 28b, 28c, 28d having a circular periphery. The person skilled in the art will appreciate that the number of discs of both the first embossing element 4 and the second embossing element 5 can be any suitable number $n$, $n$ being a non-zero positive integer, i.e. $\mathbb{Z}^+ = \{1, 2, \dots\}$. The first embossing element 4 and the second embossing element 5 have the same number of functional discs, i.e. discs that cooperate to emboss a braille code 2 in a substrate 3. By applying more than one functional disc to both the first embossing element 4 and the second embossing element 5, it is possible to emboss separate lines of braille code below each other in a substrate 3.

According to the exemplary embodiment of the device 1 shown in figure 1, the circular periphery of each disc of the four discs 27a, 27b, 27c, 27d of the first embossing element 4 and each disc of the four discs 28a, 28b, 28c, 28d of the second embossing element 5, respectively has a width that is sufficient to accommodate one braille code character. Along the circular periphery of each such disc, i.e. in a circumferential direction along the outer periphery, successive braille code characters are arranged.

As shown in figure 1, each disc of the four discs 27a, 27b, 27c, 27d of the first embossing element 4 comprises a set of studs 8a, 8b, 8c, 8d, and each disc of the four discs 28a, 28b, 28c, 28d of the second embossing element 5 is provided with a corresponding set of recesses 9a, 9b, 9c, 9d. The set of studs and the corresponding set of recesses are arranged opposite each other so as to enable a process of embossing a braille code 2 in the substrate 3 when the substrate 3 is in the embossing area 7 of the passage 6, wherein the recesses have a function in providing respective spaces which are necessary for allowing punctiform embossments to be formed in the substrate 3. Each stud 10 of a respective set of studs 8a, 8b, 8c, 8d is configured and arranged to be movable between an extended position and a retracted position, and to be fixed in either one of those positions. In the extended position, the respective stud 10 can emboss a braille code element 11 in the substrate 3. A braille code element 11 is to be construed as one dot of the six dots that can make up one braille code character being for example a letter, a number or a punctuation mark. In the retracted position, the respective stud 10 cannot emboss a braille code element 11 in the substrate 3.

The person skilled in the art will appreciate that according to another exemplary embodiment of the device 1, the first embossing element 4 is a first embossing plate that comprises the sets of studs 8a, 8b, 8c, 8d as described above, and the second embossing element 5 is a second embossing plate that is provided with the corresponding sets of recesses 9a, 9b, 9c, 9d as described above. Each of the embossing plates may have a straight, non-curved appearance, but other appearances of the plates are covered by the present invention as well. In such a case, it is practical for the first embossing plate and the second embossing plate to be movable with respect to each other in such a way that the embossing plates can be moved towards and away from each other. By moving the first embossing plate and the second embossing plate towards each other when a substrate 3 is present in the embossing area 7 of the passage 6 between the embossing plates, a braille code 2 is embossed in the substrate 3. By moving the first embossing plate and the second embossing plate away from each other, the substrate 3 is released and can be removed from the embossing area 7 of the passage 6 between the embossing plates. It follows from the foregoing that in general, the passage 6 having the embossing area 7 does not necessarily need to have fixed dimensions, but can be of variable size, depending on the design of the embossing elements 4, 5 and the way in which those elements are movable with respect to each other.

As shown in figure 1, the device 1 further comprises a setting unit 12 that includes a manipulating mechanism 14, a controller 15, a first sensing mechanism 16, a second sensing mechanism 17 and a tool unit 26, and that is configured to put individual studs 10 of a respective subset 13a, 13b, 13c, 13d of a respective set of studs 8a, 8b, 8c, 8d to one of the extended position and the retracted position. Only as a non-limiting example, the subsets 13a, 13b, 13c, 13d each comprise six studs 10. Consequently, the configuration of the first sensing mechanism 16, the manipulating mechanism 14 and the second sensing mechanism 17 shown in figures 1 also represents a non-limiting example as the configuration of those components is adapted to the number of studs 10 comprised by the respective subsets 13a, 13b, 13c, 13d.

For the sake of clarity, it is noted that the controller 15 is only diagrammatically depicted in figure 1 as a circle, while the capability of the controller 15 to communicate with various components of the device 1 is indicated by means of dashed arrows.

The manipulating mechanism 14 is arranged between the first sensing mechanism 16 and the second sensing mechanism 17. The first sensing mechanism 16, the manipulating mechanism 14 and the second sensing mechanism 17 are movably arranged with respect to the first embossing element 4 so that the first sensing mechanism 16, the manipulating mechanism 14 and the second sensing mechanism 17 can successively cover separate subsets 13a, 13b, 13c, 13d of each of the sets of studs 8a, 8b, 8c, 8d of the four discs 27a, 27b, 27c, 27d. Hence, at least one stud 10 of a respective subset 13a, 13b, 13c, 13d of the sets of studs 8a, 8b, 8c, 8d can be successively put under the influence of the first sensing mechanism 16, the manipulating mechanism 14 and the second sensing mechanism 17 in a movement of the first embossing element 4 and the setting unit 12 with respect to each other.

In the embodiment of the device 1 shown in figure 1, the individual studs 10 of four subsets 13a, 13b, 13c, 13d that each belong to a different set of studs 8a, 8b, 8c, 8d, can be simultaneously set according to four predetermined position patterns of the studs 10 of the four subsets 13a, 13b, 13c, 13d that are provided by the controller 15. In the present example, the four predetermined position patterns correspond to four braille code characters that are to be embossed in the substrate 3 (or not to be embossed when the character is a blank or space).

To set the individual studs 10 of for example the subsets 13a, 13b, 13c, 13d, the first sensing mechanism 16 is configured to determine if all studs 10 of the respective subsets 13a, 13b, 13c, 13d are in a predetermined initial position being the retracted position or the extended position. If this is not the case, the first sensing mechanism 16 will provide an error signal. In reaction to the error signal, it needs to be checked why not all studs 10 of the respective four subsets 13a, 13b, 13c, 13d are in the predetermined initial position. This could be caused by some mechanical defect in the arrangement of the respective stud 10 in the first embossing element 4. The first sensing mechanism 16 can comprise any suitable kind of sensors to determine the actual position of the individual studs 10, e.g. inductive sensors. It is by far the most practical for all studs 10 of a subset 13a, 13b, 13c, 13d to have the same initial position, but it is still to be noted that this is not essential within the scope of the invention.

Once all studs 10 of the respective four subsets 13a, 13b, 13c, 13d are in the predetermined initial position, the first embossing element 4 is moved with respect to the first sensing mechanism 16, the manipulating mechanism 14 and the second sensing mechanism 17 to position the studs 10 of the respective four subsets 13a, 13b, 13c, 13d opposite the manipulating mechanism 14 such that the manipulating mechanism 14 can set the studs 10 in accordance with the predetermined four position patterns provided by the controller 15. The manipulating mechanism 14 can comprise any kind of actuators to set the individual studs 10, e.g. piezo-electric actuators, electric motors or one of pneumatic and hydraulic power cylinders. The manipulating mechanism 14 shown in figure 1 comprises twenty-four pneumatic cylinders each of which are configured and arranged to exert a pressure on an individual stud 10, in a direction that is inward with respect to the first embossing element 4. The first embossing element 4 can be moved relative to the first sensing mechanism 16, the manipulating mechanism 14 and the second sensing mechanism 17 using any suitable kind of rotary actuator. The person skilled in the art will appreciate that the second embossing element 5 can also be moved by a rotary actuator to position the recesses located in the second embossing element 5 opposite the studs of the first embossing element 4 in the embossing area 7. The rotary actuators shown in figure 1 are servomotors.

If the initial position of the studs 10 of the respective four subsets 13a, 13b, 13c, 13d is the extended position, the controller 15 will control the manipulation mechanism 14 to exert pressure to the individual studs 10 of the respective four subsets 13a, 13b, 13c, 13d that do not need to emboss a braille code element 11 in the substrate 3. As a result, these studs 10 are moved from the extended position to the retracted position.

The person skilled in the art will appreciate that if the initial position is the retracted position, the controller 15 will control the manipulation mechanism 14 to act on the individual studs 10 of the respective four subsets 13a, 13b, 13c, 13d that need to emboss a braille code element 11 in the substrate 3. As a result, these studs 10 are moved from the retracted position to the extended position.

Once the studs 10 of the respective four subsets 13a, 13b, 13c, 13d have been set in accordance with the predetermined four position patterns, the first embossing element 4 is moved with respect to the first sensing mechanism 16, the manipulating mechanism 14 and the second sensing mechanism 17 to position the studs 10 of the respective four subsets 13a, 13b, 13c, 13d opposite the second sensing mechanism 17 such that the second sensing mechanism 17 can determine the actual positions of each of the studs 10 of the respective four subsets 13a, 13b, 13c, 13d and can provide the information obtained in this way to the controller 15. The controller 15 compares the information received from the second sensing mechanism 17, i.e. the actual positions of each of the studs 10 of the respective four subsets 13a, 13b, 13c, 13d, with the predetermined four position patterns. If the actual positions of each of the studs 10 of the respective four subsets 13a, 13b, 13c, 13d are in accordance with the predetermined four position patterns, then the individual studs 10 of the respective four subsets 13a, 13b, 13c, 13d are correctly set, and no further action is required. If the actual position of at least one stud 10 of at least one of the respective four subsets 13a, 13b, 13c, 13d is not in accordance with a corresponding predetermined position pattern of the predetermined four position patterns, then setting of said at least one stud 10 was done incorrectly. Further action is required to correct this. One possibility is to repeat the foregoing steps.

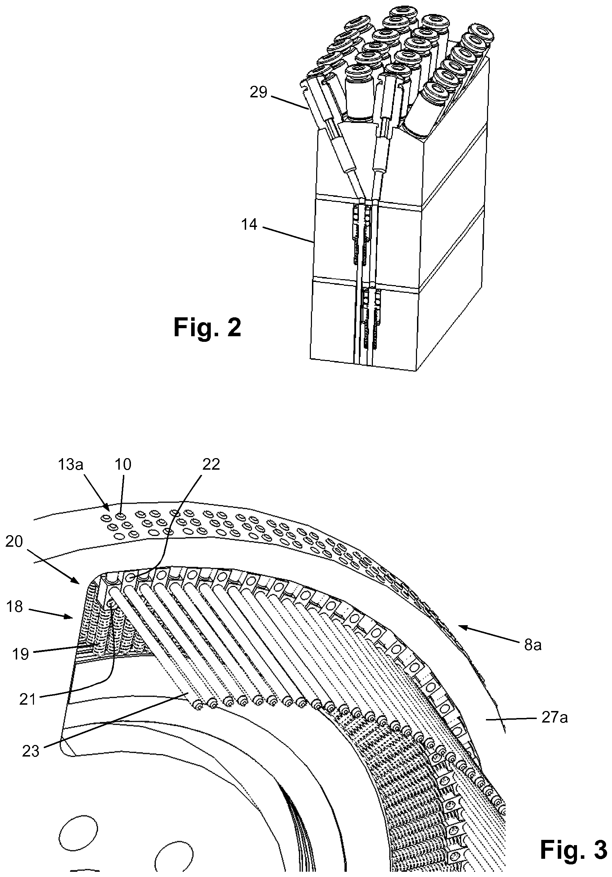

Figure 2 shows a schematic cross-section of an exemplary, non-limiting embodiment of the manipulating mechanism 14 shown in figure 1, comprising a set of twenty-four pneumatic cylinders 29. Each one of the twenty-four pneumatic cylinders 29 is configured and arranged to exert a pressure on an individual stud 10 of the four subsets 13a, 13b, 13c, 13d of the respective sets of studs 8a, 8b, 8c, 8d, to move the respective individual stud 10 between the extended position and the retracted position. As described above, the controller 15 controls the manipulating mechanism 14 based on predetermined position patterns for the studs 10 of each one of the respective four subsets 13a, 13b, 13c, 13d. Suitable fluid media for use in the pneumatic cylinders include for example a compressed gas such as compressed air or nitrogen.

The person skilled in the art will appreciate that in accordance with other exemplary embodiments of the device 1 according to the invention, the manipulating mechanism 14 can comprise for example piezo-electric actuators, electric motors or hydraulic power cylinders that are configured to exert the pressure on the individual studs of the respective four subsets to move them between the extended position and the retracted position. In the case that hydraulic cylinders are used, suitable fluid media include liquids such as oil. The present invention covers any suitable type of manipulating mechanisms 14 which are characterized by the fact that those mechanisms are somehow capable of causing movement of the studs 10 from one position to another if so desired in order to realize a correct setting of the studs 10 in a position pattern as desired.

Figure 3 shows a schematic perspective view of a portion of for example the first disc 27a of the first embossing element 4 according to an exemplary, non-limiting embodiment thereof, wherein a part of the first disc 27a is cut away to provide a perspective view on exemplary, non-limiting embodiments of a biasing mechanism 18, a locking and releasing mechanism 20 and studs 10 of the device 1 shown in figure 1.

The biasing mechanism 18 shown in figure 3 comprises a spring arrangement 19 per stud 10. The spring arrangement 19 is configured and arranged to bias each individual stud 10 of the set of studs 8a to the extended position that is the predetermined initial position of the studs 10 to which they will be moved when they are not locked. The person skilled in the art will appreciate that the spring arrangement 19 can also be configured and arranged to bias each individual stud 10 of the set of studs 8a to the retracted position. In that case the retracted position is the predetermined initial position of the studs 10 to which they will be moved when they are not locked.

The person skilled in the art will appreciate that according to other exemplary embodiments of the device 1, the biasing mechanism 18 can be configured using for example electro-magnetic actuators, piezo-electric actuators, electric motors or one of pneumatic and hydraulic cylinders to act on the individual studs 10 of the set of studs 8a for moving the studs 10 to the intended initial position in case the studs 10 are in not yet in that position. The use of a biasing mechanism 18 in the device 1 according to the invention is practical but not essential. Instead of causing the studs 10 to be in a predetermined initial position prior to setting a position pattern of the studs 10, it is also possible to use some kind of detecting means for detecting an actual initial position per stud 10 and determining per stud 10 which kind of movement is needed for realizing the position pattern. However, such a way of doing is more complex and requires more computing power, to mention one disadvantageous aspect.

Figure 3 also shows an exemplary, non-limiting embodiment of the locking and releasing mechanism 20 that comprises a pin-hole arrangement per stud 10. A part of each stud 10 is provided with a first hole 21 and a second hole 22. A pin 23 of each pin-hole arrangement is movably arranged in the device 1 so as to be insertable into the first hole 21 when a respective stud 10 is in the extended position or into the second hole 22 when a respective stud 10 is in the retracted position. The pin 23 can be removed from either one of the first hole 21 and the second hole 22 to release the respective stud 10.

When the respective pins 23 of the respective pin-hole arrangements are inserted in the respective first holes 21 and second holes 22 with which the respective studs 10 of a respective subset, e.g. 13a, of the set of studs 8a of the first disc 27a of the first embossing element 4 are provided, the locking and releasing mechanism 20 is in its locking state for those studs 10. In that case, all individual studs 10 of the respective subset 13a are mechanically locked in either their extended position or retracted position.

When the respective pins 23 of the respective pin-hole arrangements are removed from the respective first holes 21 and second holes 22 with which the respective studs 10 of the respective subset 13a of the set of studs 8a are provided, the locking and releasing mechanism 20 is in its releasing state in respect of those studs 10. In that case, all individual studs 10 of the respective subset 13a are released and moved by the biasing mechanism 18 to a predetermined initial position being either the extended position or the retracted position.

If the initial position of the studs 10 of the respective subset 13a is the extended position, the individual studs 10 of the respective subset 13a which need to be in the retracted position for the purpose of realizing the predetermined position pattern for the respective subset can be moved by the manipulating mechanism 14 from the extended position to the retracted position. When the individual studs 10 of the respective subset 13a have assumed their positions in accordance with the predetermined position pattern, the pins 23 of the locking and releasing mechanism 20 are inserted into either the first hole 21 or the second hole 22, particularly the ones of those holes 21, 22 which are present at the level of the pins 23 for each of the studs 10, to mechanically lock the studs 10. If the studs 10 of the respective subset 13a need to be arranged in accordance with a different position pattern, the pins 23 are removed from the respective first hole 21 or second hole 22 to release the studs 10. Upon releasing the studs, the biasing mechanism 18 moves them to the predetermined initial position, being the extended position in this example. From that position, the studs 10 can be manipulated so that the different position pattern can be made.

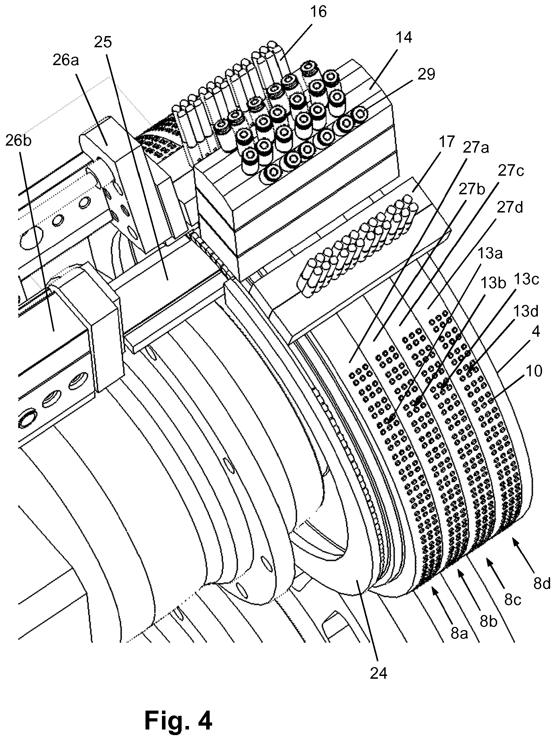

Figure 4 shows a schematic perspective view of a portion of a carrier 24 including an adjustable portion 25 functioning as a cover element in the device 1 shown in figure 1, according to an exemplary, non-limiting embodiment of the cover element 25, wherein the cover element 25 is shown in a default position thereof. The purpose of the cover element 25 is to cover the pins 23 of the locking and releasing mechanism 20 as long as the studs 10 do not need to be subjected to manipulation. In this way, the state of the locking and releasing mechanism 20 in respect of the studs 10 cannot be accidentally changed from the locking state to the releasing state and vice versa by accidental movement of the pins 23.

The cover element 25 is configured and arranged to prevent access to a predetermined number of pins 23 of pin-hole arrangements of the locking and releasing mechanism 20 as a default. As shown in figure 4, if the cover element 25 is in the default position, the pins 23 cannot be reached because the cover element 25 is in the way. As a result, the locking and releasing mechanism 20 remains in the locking state in respect of all of the studs 10 so that the studs 10 remain in their actual position pattern.

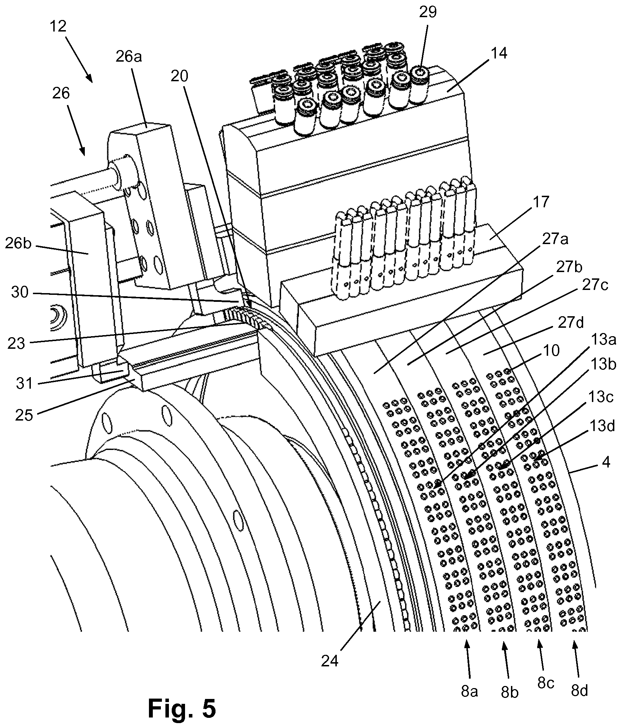

As shown in figure 5, if the cover element 25 is in an actuated position thereof, the pins 23 of a number of studs 10 can be reached because the cover element 25 is moved out of the way. As a result, the locking and releasing mechanism 20 can be brought into the releasing state in respect of those studs 10. As described above, the studs 10 that are mechanically unlocked will be moved by the biasing mechanism 18 towards the predetermined initial position. Upon setting the studs 10 in accordance with predetermined position patterns for a different braille code 2 that is to be embossed, the pins 23 can be moved back into the respective first holes 21 and the respective second holes 22. In this way, the studs 10 are mechanically locked and the locking and releasing mechanism 20 is brought into the locking state. Upon moving the cover element 25 to the default position thereof, the pins 23 are covered and protected from any undesired or accidental manipulation.

The carrier 24 including the cover element 25 and the first embossing element 4 are movably arranged with respect to each other. In this way, it is possible to select the studs 10 that need to be set in accordance with a different predetermined position pattern. While moving the carrier 24 including the cover element 25 and the first embossing element 4 relative to each other, the cover element 25 is kept in the default position to prevent manipulation of any kind, e.g. accidental manipulation, of the pins 23 of the locking and releasing mechanism 20.

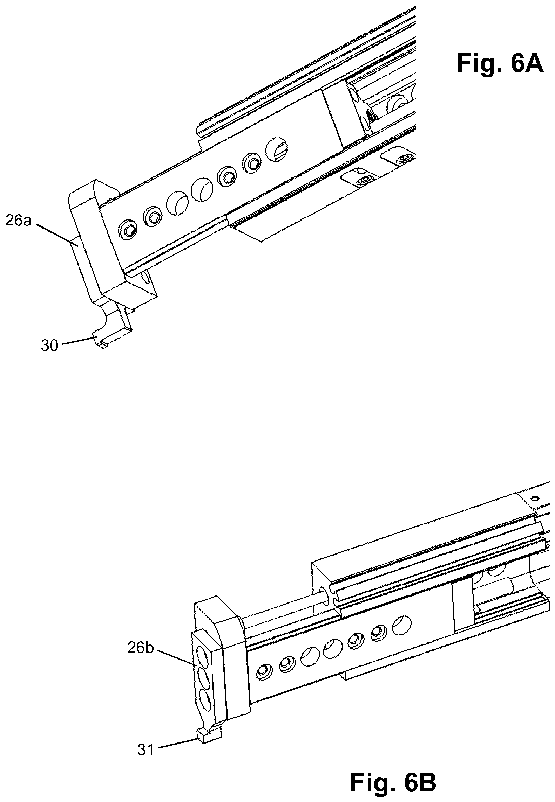

Figure 6A shows a schematic perspective view of an exemplary, non-limiting embodiment of an engagement tool 26a of the tool unit 26 of the device 1 shown in figure 1. The engagement tool 26a comprises a hook-shaped end part 30 that is configured and arranged to engage with the pins 23 of the pin-hole arrangements of the locking and releasing mechanism 20 in order to be capable of removing the pins 23 from either the first holes 21 or the second holes 22 of the respective pin-hole arrangements to mechanically unlock the corresponding studs 10, and to move the pins 23 back to their position for locking the studs 10. In the shown example, the pins 23 are provided with a groove near a free end thereof so as to enable the engagement of the hook-shaped end part 30 of the engagement tool 26 to the pins 23, as can best be seen in figure 3. Further, in the shown example, the hook-shaped end part 30 is in fact an end part of an arm that is arranged so as to be extendable from and retractable to a frame of the tool unit 26.

Figure 6B shows a schematic perspective view of an exemplary, non-limiting embodiment of a cover element manipulating tool 26b of the tool unit 26 of the device 1 shown in figure 1. The cover element manipulating tool 26b comprises a block-shaped end part 31 that is configured and arranged to engage with the cover element 25 for the purpose of moving the cover element 25 between the default position and the actuated position thereof. In the shown example, the carrier 24 including the cover element 25 is generally ring-shaped, and the default position of the cover element 25 is an outmost position in the ring shape of the carrier 24, whereas the actuated position is a more inward position with respect to the general ring shape of the carrier 24.

The present invention can be summarized as relating to a device 1 for embossing a code 2 such as a braille code in a substrate 3. The device 1 includes a first embossing element 4 comprising a set of studs 8 and a second embossing element 5 provided with a corresponding set of recesses 9. Each stud 10 is movable between extended and retracted positions. The device 1 further comprises a setting unit 12 for putting studs 10 of a respective subset 13 of the set of studs 8 to the extended or retracted positions. The setting unit 12 includes a manipulating mechanism 14 for manipulating at least one stud 10 of the respective subset 13, and a controller 15 for processing information relating to a predetermined position pattern of the studs 10 of the respective subset 13 and to control operation of the manipulating mechanism 14 based on said information. The manipulating mechanism 14 is movably arranged with respect to the first embossing element 4 for successively covering subsets 13 of the set of studs 8. The invention also relates to a method for determining characteristics of control of a device 1 as mentioned.

It will be clear to a person skilled in the art that the scope of the present invention is not limited to the examples discussed in the foregoing but that several amendments and modifications thereof are possible without deviating from the scope of the present invention as defined by the attached claims. In particular, combinations of specific features of various aspects of the invention may be made. An aspect of the invention may be further advantageously enhanced by adding a feature that was described in relation to another aspect of the invention. While the present invention has been illustrated and described in detail in the figures and the description, such illustration and description are to be considered illustrative or exemplary only, and not restrictive.

The present invention is not limited to the disclosed embodiments. Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. The mere fact that certain measures are recited in mutually different dependent claims does not indicate that a combination of these measures cannot be used to advantage. Any reference numerals in the claims should not be construed as limiting the scope of the present invention.

REFERENCE NUMERALS

| | |
|---|---|
| 1 | device for embossing a braille code in a substrate |
| 2 | braille code |
| 3 | substrate in which the braille code is embossed |
| 4 | first embossing element |
| 5 | second embossing element |
| 6 | passage between the first embossing element and the second embossing element |
| 7 | embossing area |
| 8a | first set of studs of the first embossing element |
| 8b | second set of studs of the first embossing element |
| 8c | third set of studs of the first embossing element |
| 8d | fourth set of studs of the first embossing element |
| 9a | first set of recesses of the second embossing |

element

9b    second set of recesses of the second embossing element

9c    third set of recesses of the second embossing element

9d    fourth set of recesses of the second embossing element

10    stud

11    braille code element

12    setting unit

13a   first subset of the different sets of studs

13b   second subset of the different sets of studs

13c   third subset of the different sets of studs

13d   fourth subset of the different sets of studs

14    manipulating mechanism

15    controller

16    first sensing mechanism

17    second sensing mechanism

18    biasing mechanism

19    spring arrangement of the biasing mechanism

20    locking and releasing mechanism

21    first hole of the pin-hole arrangement

22    second hole of the pin-hole arrangement

23    pin of the pin-hole arrangement

24    carrier including cover element

25    cover element

26    tool unit

26a   engagement tool

26b   cover element manipulating tool

27a   first disc of the first embossing element

27b   second disc of the first embossing element

27c   third disc of the first embossing element

27d   fourth disc of the first embossing element

28a   first disc of the second embossing element

28b   second disc of the second embossing element

28c   third disc of the second embossing element

28d   fourth disc of the second embossing element

29    pneumatic cylinders of the manipulating mechanism

30    hook-shaped end part of the first engagement member of the engagement tool

31    block-shaped end part of the second engagement member of the engagement tool

## Claims

1.  Device (1) configured to emboss a code (2) in a substrate (3), the device (1) comprising:

    - a first embossing element (4) and a second embossing element (5) between which a passage (6) for conveying the substrate is defined, the passage (6) including an embossing area (7) where the first embossing element (4) and the second embossing element (5) interact to emboss a code (2) in the substrate (3) during operation of the device (1), the first embossing element (4) comprising a set of studs (8a, 8b, 8c, 8d) and the second embossing element (5) being provided with a corresponding set of recesses (9a, 9b, 9c, 9d), each stud (10) of the set of studs (8a, 8b, 8c, 8d) being configured and arranged to be movable between an extended position in which embossing a code element (11) in the substrate (3) is enabled and a retracted position in which embossing a code element (11) in the substrate (3) is prevented; and
    - a setting unit (12) configured to put studs (10) of a respective subset (13a, 13b, 13c, 13d) of the set of studs (8a, 8b, 8c, 8d) to one of the extended position and the retracted position, the setting unit (12) including:

        - a manipulating mechanism (14) configured to manipulate at least one stud (10) of the respective subset (13a, 13b, 13c, 13d); and
        - a controller (15) configured to process information relating to a predetermined position pattern of the studs (10) of the respective subset (13a, 13b, 13c, 13d) and to control operation of the manipulating mechanism (14) based on said information;

    characterized in that the first embossing element (4) and the manipulating mechanism (14) are movably arranged with respect to each other so that the manipulating mechanism (14) is capable of successively covering subsets (13a, 13b, 13c, 13d) of the set of studs (8a, 8b, 8c, 8d).

2.  Device (1) according to claim 1, wherein the manipulating mechanism (14) is configured to exert pressure on at least one stud (10) of the respective subset (13a, 13b, 13c, 13d) of the set of studs (8a, 8b, 8c, 8d) in at least one of the extended position and the retracted position of the at least one stud (10).

3.  Device (1) according to claim 2, wherein the manipulating mechanism (14) is configured to exert the pressure on the at least one stud (10) of the respective subset (13a, 13b, 13c, 13d) of the set of studs (8a, 8b, 8c, 8d) through a fluid medium.

4.  Device (1) according to any one of the claims 1-3, wherein the setting unit (12) comprises at least one sensing mechanism (16) that is configured and arranged to detect an actual position of at least one stud (10) of the respective subset (13a, 13b, 13c, 13d) of the set of studs (8a, 8b, 8c, 8d) and to provide the controller (15) with input about the actual position of said at least one stud (10), and wherein the controller (15) is configured to compare the input about the actual position of said at least one stud (10) with information relating to a reference position for said at least one stud (10).

5. Device (1) according to claim 4, wherein the setting unit (12) comprises a first sensing mechanism (16) and a second sensing mechanism (17) that are movably arranged with respect to the first embossing element (4) so that the first sensing mechanism (16) and the second sensing mechanism (17) are capable of successively covering studs (10) of respective subsets of the set of studs (8a, 8b, 8c, 8d), and wherein the manipulating mechanism (14) is arranged between the first sensing mechanism (16) and the second sensing mechanism (17) whereby the setting unit (12) is configured to put the at least one stud (10) of a respective subset (13a, 13b, 13c, 13d) of the set of studs (8a, 8b, 8c, 8d) successively under the influence of the first sensing mechanism (16), the manipulating mechanism (14) and the second sensing mechanism (17) in a movement of the first embossing element (4) and the setting unit (12) with respect to each other.

6. Device (1) according to any one of the claims 1-5, comprising a biasing mechanism (18) that is configured and arranged to bias each stud (10) of the set of studs (8a, 8b, 8c, 8d) of the first embossing element (4) to one of the extended position and the retracted position.

7. Device (1) according to claim 6, wherein the biasing mechanism (18) comprises a spring arrangement (19) per stud (10).

8. Device (1) according to any one of the claims 1-7, comprising a locking and releasing mechanism (20) that is adjustable to assume one of a locking state and a releasing state per stud (10), and that is configured and arranged to mechanically lock each of the studs (10) of a respective subset (13a, 13b, 13c, 13d) of the set of studs (8a, 8b, 8c, 8d) in the extended position or in the retracted position in the locking state, and to release the studs (10) of said respective subset (13a, 13b, 13c, 13d) in the releasing state so that each stud (10) of said respective subset (13a, 13b, 13c, 13d) is movable between the extended position and the retracted position.

9. Device (1) according to claim 8, wherein the locking and releasing mechanism (20) comprises a pin-hole arrangement per stud (10), a part of each stud (10) being provided with a first hole (21) and a second hole (22), the pin (23) of each pin-hole arrangement being movably arranged in the device to be insertable into the first hole (21) when the stud (10) is in the extended position, to be insertable into the second hole (22) when the stud (10) is in the retracted position, and to be removable out of either one of the first hole (21) and the second hole (22) to release the stud (10).

10. Device (1) according to claim 8 or 9, comprising an engagement tool (26a) configured to engage with the locking and releasing mechanism (20) and to vary the state of the locking and releasing mechanism (20) per stud (10).

11. Device (1) according to any of claims 8-10, comprising a cover element (25) that is adjustable to be in one of a default position with respect to the first embossing element (4) and an actuated position with respect to the first embossing element (4), and that is configured and arranged to prevent operation of the locking and releasing mechanism (20) in the default position, and to allow operation of the locking and releasing mechanism (20) in the actuated position.

12. Device (1) according to claim 11, comprising a cover element manipulating tool (26b) configured to act on the cover element (25) and to vary the position of the cover element (25).

13. Device (1) according to any one of the claims 1-12, wherein the first embossing element (4) comprises at least one disc (27a, 27b, 27c, 27d) having a circular periphery, wherein the second embossing element (5) comprises at least one disc (28a, 28b, 28c, 28d) having a circular periphery, and wherein the first embossing element (4) and the second embossing element (5) comprise the same number of discs (27a, 27b, 27c, 27d, 28a, 28b, 28c, 28d).

14. Method for determining characteristics of control of a device (1) according to any one of the claims 1-13, wherein the predetermined position pattern of the studs (10) of a respective subset (13a, 13b, 13c, 13d) of the set of studs (8a, 8b, 8c, 8d) of the first embossing element (4) is provided in the form of a computer-readable file, and wherein a computer program is provided and run, and the computer program reads said file, determines control signals, and transmits said control signals to components of the device (1) according to any one of the claims 1-13 involved in setting said predetermined position pattern.

**Patentansprüche**

1. Vorrichtung (1), die zum Prägen eines Codes (2) in ein Substrat (3) konfiguriert ist, wobei die Vorrichtung (1) umfasst:

    - ein erstes Prägeelement (4) und ein zweites Prägeelement (5), zwischen denen ein Durchgang (6) zum Transport des Substrats definiert ist, wobei der Durchgang (6) einen Prägebereich (7) umfasst, in dem das erste Prägeelement (4) und das zweite Prägeelement (5) zusammenwirken, um während des Betriebs der Vorrichtung (1) einen Code (2) in das Substrat (3) zu prägen, wobei das erste Prägeelement (4) einen Satz von Noppen (8a, 8b, 8c, 8d) umfasst und das zweite Prägeelement (5) mit einem entsprechenden Satz von Aussparungen (9a, 9b, 9c, 9d) versehen ist, wobei jede Noppe (10) des Satzes von Noppen (8a, 8b, 8c, 8d) so konfiguriert und angeordnet ist, dass er zwischen einer ausgefahrenen Position, in der das Prägen eines Codeelements (11) in das Substrat (3) ermöglicht wird, und einer eingezogenen Position, in der das Prägen eines Codeelements (11) in das Substrat (3) verhindert wird, beweglich ist; und
- eine Stelleinheit (12), die so konfiguriert ist, dass sie Noppen (10) einer jeweiligen Untergruppe (13a, 13b, 13c, 13d) des Satzes von Noppen (8a, 8b, 8c, 8d) entweder in die ausgefahrene Position oder in die eingefahrene Position bringt, wobei die Stelleinheit (12) umfasst:

- einen Manipulationsmechanismus (14), der so konfiguriert ist, dass er mindestens eine Noppe (10) der jeweiligen Untergruppe (13a, 13b, 13c, 13d) manipuliert; und
- eine Steuerung (15), die so konfiguriert ist, dass sie Informationen bezüglich eines vorbestimmten Positionsmusters der Noppen (10) der jeweiligen Untergruppe (13a, 13b, 13c, 13d) verarbeitet und den Betrieb des Manipulationsmechanismus (14) auf der Grundlage dieser Informationen steuert;

**dadurch gekennzeichnet, dass** das erste Prägeelement (4) und der Manipulationsmechanismus (14) beweglich zueinander angeordnet sind, so dass der Manipulationsmechanismus (14) in der Lage ist, nacheinander Untergruppen (13a, 13b, 13c, 13d) des Satzes von Noppen (8a, 8b, 8c, 8d) abzudecken.

2. Vorrichtung (1) nach Anspruch 1, wobei der Manipulationsmechanismus (14) so konfiguriert ist, dass er auf mindestens eine Noppe (10) der jeweiligen Untergruppe (13a, 13b, 13c, 13d) des Satzes von Noppen (8a, 8b, 8c, 8d) in mindestens einer der ausgefahrenen Position und der eingefahrenen Position der mindestens einen Noppe (10) Druck ausübt.

3. Vorrichtung (1) nach Anspruch 2, wobei der Manipulationsmechanismus (14) so konfiguriert ist, dass er den Druck auf die mindestens eine Noppe (10) der jeweiligen Untergruppe (13a, 13b, 13c, 13d) des Satzes von Noppen (8a, 8b, 8c, 8d) durch ein fluides Medium ausübt.

4. Vorrichtung (1) nach einem der Ansprüche 1 bis 3, wobei die Stelleinheit (12) mindestens einen Erfassungsmechanismus (16) umfasst, der so konfiguriert und angeordnet ist, dass er eine tatsächliche Position von mindestens einer Noppe (10) der jeweiligen Untergruppe (13a, 13b, 13c, 13d) des Satzes von Noppen (8a, 8b, 8c, 8d) zu erfassen und die Steuerung (15) mit einer Eingabe über die tatsächliche Position der mindestens einen Noppe (10) zu versorgen, und wobei die Steuerung (15) so konfiguriert ist, dass sie die Eingabe über die tatsächliche Position der mindestens einen Noppe (10) mit Informationen bezüglich einer Referenzposition für die mindestens eine Noppe (10) vergleicht.

5. Vorrichtung (1) nach Anspruch 4, wobei die Stelleinheit (12) einen ersten Erfassungsmechanismus (16) und einen zweiten Erfassungsmechanismus (17) umfasst, die in Bezug auf das erste Prägeelement (4) beweglich angeordnet sind, so dass der erste Erfassungsmechanismus (16) und der zweite Erfassungsmechanismus (17) in der Lage sind, nacheinander Noppen (10) von jeweiligen Untergruppen des Satzes von Noppen (8a, 8b, 8c, 8d) abzudecken, und wobei der Manipulationsmechanismus (14) zwischen dem ersten Erfassungsmechanismus (16) und dem zweiten Erfassungsmechanismus (17) angeordnet ist, wodurch die Stelleinheit (12) so konfiguriert ist, dass sie die mindestens eine Noppe (10) einer jeweiligen Untergruppe (13a, 13b, 13c, 13d) des Satzes von Noppen (8a, 8b, 8c, 8d) nacheinander unter dem Einfluss des ersten Erfassungsmechanismus (16), des Manipulationsmechanismus (14) und des zweiten Erfassungsmechanismus (17) in eine Bewegung des ersten Prägeelements (4) und der Stelleinheit (12) in Bezug aufeinander zu bringen.

6. Vorrichtung (1) nach einem der Ansprüche 1 bis 5, die einen Vorspannmechanismus (18) umfasst, der so konfiguriert und angeordnet ist, dass er jede Noppe (10) des Satzes von Noppen (8a, 8b, 8c, 8d) des ersten Prägeelements (4) entweder in die ausgefahrene oder die eingefahrene Position vorspannt.

7. Vorrichtung (1) nach Anspruch 6, wobei der Vorspannmechanismus (18) eine Federanordnung (19) pro Noppe (10) umfasst.

8. Vorrichtung (1) nach einem der Ansprüche 1-7, umfassend einen Verriegelungs- und Freigabemechanismus (20), der einstellbar ist, um entweder einen Verriegelungszustand oder einen Freigabezustand pro Noppe (10) anzunehmen, und der konfiguriert und angeordnet ist, um jeden der Noppen (10) einer jeweiligen Untergruppe (13a, 13b, 13c, 13d) des Satzes von Noppen (8a, 8b, 8c, 8d) in der ausgefahrenen Position oder in der eingefahrenen Position im Verriegelungszustand mechanisch zu verriegeln, und die Noppen (10) der jeweiligen Untergruppe (13a, 13b, 13c, 13d) im Freigabezustand freizugeben, so dass jede Noppe (10) der jeweiligen Untergruppe (13a, 13b, 13c, 13d) zwischen der ausgefahrenen Position und der eingefahrenen Position beweglich ist.

9. Vorrichtung (1) nach Anspruch 8, wobei der Verriegelungs- und Freigabemechanismus (20) eine Stiftlochanordnung pro Noppe (10) umfasst, wobei ein Teil jeder Noppe (10) mit einem ersten Loch (21) und einem zweiten Loch (22) versehen ist, wobei der Stift (23) jeder Stiftlochanordnung beweglich in der Vorrichtung angeordnet ist, um in das erste Loch (21) eingeführt werden zu können, wenn sich die Noppe (10) in der ausgefahrenen Position befindet, um in das zweite Loch (22) eingeführt werden zu können, wenn sich die Noppe (10) in der eingefahrenen Position befindet, und um aus dem ersten Loch (21) oder dem zweiten Loch (22) herausgenommen werden zu können, um die Noppe (10) freizugeben.

10. Vorrichtung (1) nach Anspruch 8 oder 9, umfassend ein Eingriffswerkzeug (26a), das so konfiguriert ist, dass es mit dem Verriegelungs- und Freigabemechanismus (20) in Eingriff kommt und den Zustand des Verriegelungs- und Freigabemechanismus (20) pro Noppe (10) verändert.

11. Vorrichtung (1) nach einem der Ansprüche 8-10, umfassend ein Abdeckelement (25), das so einstellbar ist, dass es sich entweder in einer Standardposition in Bezug auf das erste Prägeelement (4) oder in einer betätigten Position in Bezug auf das erste Prägeelement (4) befindet, und das so konfiguriert und angeordnet ist, dass es den Betrieb des Verriegelungs- und Freigabemechanismus (20) in der Standardposition verhindert und den Betrieb des Verriegelungs- und Freigabemechanismus (20) in der betätigten Position ermöglicht.

12. Vorrichtung (1) nach Anspruch 11, umfassend ein Abdeckelement-Manipulationswerkzeug (26b), das konfiguriert ist, um auf das Abdeckelement (25) einzuwirken und die Position des Abdeckelements (25) zu verändern.

13. Vorrichtung (1) nach einem der Ansprüche 1 bis 12, wobei das erste Prägeelement (4) mindestens eine Scheibe (27a, 27b, 27c, 27d) mit einem kreisförmigen Umfang aufweist, wobei das zweite Prägeelement (5) mindestens eine Scheibe (28a, 28b, 28c, 28d) mit einem kreisförmigen Umfang umfasst, und wobei das erste Prägeelement (4) und das zweite Prägeelement (5) die gleiche Anzahl von Scheiben (27a, 27b, 27c, 27d, 28a, 28b, 28c, 28d) umfassen.

14. Verfahren zur Bestimmung von Steuerkenngrößen einer Vorrichtung (1) nach einem der Ansprüche 1-13, wobei das vorgegebene Positionsmuster der Noppen (10) einer jeweiligen Untergruppe (13a, 13b, 13c, 13d) des Satzes von Noppen (8a, 8b, 8c, 8d) des ersten Prägeelements (4) in Form einer computerlesbaren Datei bereitgestellt wird, und wobei ein Computerprogramm bereitgestellt und ausgeführt wird, und das Computerprogramm die Datei liest, Steuersignale bestimmt und die Steuersignale an Komponenten der Vorrichtung (1) nach einem der Ansprüche 1 bis 13 überträgt, die an der Einstellung des vorbestimmten Positionsmusters beteiligt sind.

## Revendications

1. Dispositif (1) configuré pour gaufrer un code (2) dans un substrat (3), le dispositif (1) comprenant:

un premier élément de gaufrage (4) et un second élément de gaufrage (5) entre lesquels un passage (6) pour convoyer le substrat est défini, le passage (6) incluant une zone de gaufrage (7) où le premier élément de gaufrage (4) et le second élément de gaufrage (5) interagissent pour gaufrer un code (2) dans le substrat (3) pendant le fonctionnement du dispositif (1), le premier élément de gaufrage (4) comprenant une série de pointes (8a, 8b, 8c, 8d) et le second élément de gaufrage (5) étant pourvu d'une série correspondante d'évidements (9a, 9b, 9c, 9d), chaque pointe (10) de la série de pointes (8a, 8b, 8c, 8d) étant configurée pour et agencée pour être mobile entre une position étendue dans laquelle gaufrer un élément de code (11) dans le substrat (3) est permis et une position rétractée dans laquelle gaufrer un élément de code (11) dans le substrat (3) est empêché; et une unité de réglage (12) configurée pour mettre des pointes (10) d'un sous-ensemble (13a, 13b, 13c, 13d) respectif de la série de pointes (8a, 8b, 8c, 8d) dans l'une de la position étendue et de la position rétractée, l'unité de réglage (12) incluant:

un mécanisme de manipulation (14) configuré pour manipuler au moins une pointe (10) du sous-ensemble (13a, 13b, 13c, 13d) respectif, et une commande (15) configurée pour traiter l'information concernant un motif de positions prédéterminé des pointes (10) du sous-ensemble (13a, 13b, 13c, 13d) respectif et pour commander le fonctionnement du mécanisme de manipulation (14) en fonction de ladite information; **caractérisé en ce que** le premier élément de gaufrage (4) et le mécanisme de manipulation (14) sont agencés mobilement l'un par rapport à l'autre de telle manière que le mécanisme de manipulation (14) peut couvrir successivement des sous-ensembles (13a, 13b, 13c, 13d) de la série de pointes (8a, 8b, 8c, 8d).

2. Dispositif (1) selon la revendication 1, dans lequel le mécanisme de manipulation (14) est configuré pour exercer une pression sur l'au moins une pointe (10) du sous-ensemble (13a, 13b, 13c, 13d) respectif de la série de pointes (8a, 8b, 8c, 8d) dans au moins une de la position étendue et la position rétractée de l'au moins une pointe (10).

3. Dispositif (1) selon la revendication 2, dans lequel le mécanisme de manipulation (14) est configuré pour exercer la pression sur l'au moins une pointe (10) du sous-ensemble (13a, 13b, 13c, 13d) respectif de la série de pointes (8a, 8b, 8c, 8d) par l'intermédiaire d'un medium fluide.

4. Dispositif (1) selon l'une quelconque des revendications 1-3, dans lequel l'unité de réglage (12) comprend au moins un mécanisme de détection (16) qui est configuré et agencé pour détecter une position réelle de l'au moins une pointe (10) du sous-ensemble (13a, 13b, 13c, 13d) respectif de la série de pointes (8a, 8b, 8c, 8d) et pour fournir à la commande une entrée concernant la position réelle de l'au moins une pointe (10), et dans lequel la commande (15) est configurée pour comparer l'entrée concernant la position réelle de ladite au moins une pointe (10) à une information concernant une position de référence pour ladite au moins une pointe (10).

5. Dispositif (1) selon la revendication 4, dans lequel l'unité de réglage (12) comprend un premier mécanisme de détection (16) et un second mécanisme de détection (17) qui sont agencés mobilement par rapport au premier élément de gaufrage (4) de telle manière que le premier mécanisme de détection (16) et le second mécanisme de détection (17) peuvent couvrir successivement des pointes (10) de sous-ensembles respectifs de la série de pointes (8a, 8b, 8c, 8d), et dans lequel le mécanisme de manipulation (14) est agencé entre le premier mécanisme de détection (16) et le second mécanisme de détection (17) moyennant quoi l'unité de réglage (12) est configurée pour mettre l'au moins une pointe (10) d'un sous-ensemble (13a, 13b, 13c, 13d) respectif de la série de pointes (8a, 8b, 8c, 8d) successivement sous l'influence du premier mécanisme de détection (16), du mécanisme de manipulation (14) et du second mécanisme de détection (17) dans un mouvement du premier élément de gaufrage (4) et de l'unité de réglage (12) l'un par rapport à l'autre.

6. Dispositif (1) selon l'une quelconque des revendications 1-5, comprenant un mécanisme de sollicitation (18) qui est configuré et agencé pour solliciter chaque pointe (10) de la série de pointes (8a, 8b, 8c, 8d) du premier élément de gaufrage (4) dans l'une de la position étendue et la position rétractée.

7. Dispositif (1) selon la revendication 6, dans lequel le mécanisme de sollicitation (18) comprend un agencement de ressort (19) par pointe (10).

8. Dispositif (1) selon l'une quelconque des revendications 1-7, comprenant un mécanisme de verrouillage et de libération (20) qui est réglable pour prendre l'un d'un état de verrouillage et d'un état de libération par pointe (10), et qui est configuré et agencé pour verrouiller mécaniquement chacune des pointes (10) d'un sous-ensemble (13a, 13b, 13c, 13d) respectif de la série de pointes (8a, 8b, 8c, 8d) dans la position étendue ou dans la position rétractée dans l'état de verrouillage, et pour libérer les pointes (10) dudit sous-ensemble (13a, 13b, 13c, 13d) respectif dans la position de libération de telle manière que chaque pointe (10) dudit sous-ensemble (13a, 13b, 13c, 13d) respectif est mobile entre la position étendue et la position rétractée.

9. Dispositif (1) selon la revendication 8, dans lequel le mécanisme de verrouillage et de libération (20) comprend un agencement goupille-trou par pointe (10), une partie de chaque pointe (10) étant pourvue d'un premier trou (21) et d'un second trou (22), la goupille (23) de chaque agencement goupille-trou étant agencée mobilement dans le dispositif pour pouvoir être insérée dans le premier trou (21) quand la pointe (10) est dans la position étendue, pour pouvoir être insérée dans le second trou (22) quand la pointe (10) est dans la position rétractée, et pour pouvoir être enlevée de l'un ou l'autre du premier trou (21) et du second trou (22) pour libérer la pointe (10).

10. Dispositif (1) selon la revendication 8 ou 9, comprenant un outil de prise (26a) configuré pour venir en prise avec le mécanisme de verrouillage et de libération (20) et pour faire varier l'état du mécanisme de verrouillage et de libération (20) par pointe (10).

11. Dispositif (1) selon l'une quelconque des revendications 8-10, comprenant un élément de couverture (25) qui est réglable pour être dans l'une d'une position par défaut par rapport au premier élément de gaufrage (4) et d'une position actionnée par rapport au premier élément de gaufrage (4), et qui est configuré et agencé pour empêcher le fonctionnement du mécanisme de verrouillage et de libération (20) dans la position par défaut, et pour permettre le fonctionnement du mécanisme de verrouillage et de libération (20) dans la position actionnée.

**12.** Dispositif (1) selon la revendication 11, comprenant un outil de manipulation d'élément de couverture (26b) configuré pour agir sur l'élément de couverture (25) et pour faire varier la position de l'élément de couverture (25).

**13.** Dispositif (1) selon l'une quelconque des revendications 1-12, dans lequel le premier élément de gaufrage (4) comprend au moins un disque (27a, 27b, 27c, 27d) ayant une périphérie circulaire, dans lequel le second élément de gaufrage (5) comprend au moins un disque (28a, 28b, 28c, 28d) ayant une périphérie circulaire, et dans lequel le premier élément de gaufrage (4) et le second élément de gaufrage (5) comprennent le même nombre de disques (27a, 27b, 27c, 27d, 28a, 28b, 28c, 28d).

**14.** Procédé de détermination de caractéristiques de commande d'un dispositif (1) selon l'une quelconque des revendications précédentes 1-13, dans lequel le motif de position prédéterminé des pointes (10) d'un sous-ensemble (13a, 13b, 13c, 13d) respectif de la série de pointes (8a, 8b, 8c, 8d) du premier élément de gaufrage (4) est fourni sous la forme d'un fichier lisible informatiquement, et dans lequel un programme informatique est fournit et fonctionne, et le programme informatique lit ledit fichier, détermine des signaux de commande, et transmets lesdits signaux de commande à des composants du dispositif (1) selon l'une quelconque des revendications 1-13 impliqués dans le réglage dudit motif de position prédéterminé.

**Fig. 1**

**Fig. 2**

**Fig. 3**

**Fig. 4**

**Fig. 5**

**Fig. 6A**

26a

30

26b

31

**Fig. 6B**

**EP 3 741 549 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- DE 102011113632 A1